# EUROPEAN PATENT SPECIFICATION

(11) **EP 3 229 423 B1**
(45) Date of publication and mention of the grant of the patent: **28.04.2021**
(21) Application number: 15864919.4
(22) Date of filing: 05.11.2015
(51) Int. Cl.: H04L 12/771, H04L 12/24, H04W 24/02, H04W 84/12, H04W 88/08, H04W 12/00

(54) **METHOD AND DEVICE FOR DISPLAYING SETTING INTERFACE OF ROUTER**
VERFAHREN UND VORRICHTUNG ZUR ANZEIGE DER EINSTELLSCHNITTSTELLE EINES ROUTERS
PROCÉDÉ ET DISPOSITIF D'AFFICHAGE D'UNE INTERFACE DE CONFIGURATION DE ROUTEUR

(30) Priority: 01.12.2014 CN 201410715523
(43) Date of publication of application: 11.10.2017
(73) Proprietor: Xiaomi Inc., Beijing 100085 (CN)
(72) Inventor: CHEN, Yong, Beijing 100085 (CN); HUANG, Qiuzhi, Beijing 100085 (CN); WANG, Yidong, Beijing 100085 (CN)
(74) Representative: Hughes, Andrea Michelle
(86) International application number: PCT/CN2015/093859
(87) International publication number: WO 2016/086749

(56) References cited:
- WO-A2-2008/048809
- CN-A- 103 873 359
- CN-A- 104 506 443
- US-A1- 2012 239 916
- US-A1- 2013 064 132
- US-B2- 8 705 408

## Description

### TECHNICAL FIELD

The present disclosure relates to the field of wireless communication, and more particularly, to a method and an apparatus for displaying a router setup interface.

### BACKGROUND

A wireless router is a kind of communication device that connects a wired network with a wireless network, and the wireless router can establish a wireless local area network by transmitting and receiving radio signals. After initial start-up or being restored to factory settings, the wireless router needs an initialization setup before it can provide normal network services.

The case in which a user performs initialization setup on the wireless router via a smart phone is described below as an example. In the related art, after a wireless router is installed and turned on, the user scans neighboring wireless networks by his/her smart phone, and selects to access to the wireless router listed in a wireless access point list obtained by scanning. After a successful access, the user opens a browser in the smart phone, and inputs an admin backstage address. According to the admin backstage address, the browser acquires a setup interface from the wireless router and displays the setup interface, so that the user can perform, in the setup interface, initialization setup on the wireless router.

In the above solution of the related art, when the user performs initialization setup on the wireless router, the user will have to create a connection between the smart phone and the wireless router and manually input the admin backstage address, which makes the operation process complicated and lowers the user experience.

US 2013/064132A1 relates to a method and computer program product for configuring a network device that broadcasts a network device identifier. The method and computer code includes comparing the network device identifier to at least one previously detected network device identifier. If there is a match, a first interface for configuring the network device associated with the matched network device identifier is displayed. If there is no match, a second interface is displayed to prompt the user to select a network device to configure.

US 2012/239916A1 relates to a router with an integrated configuration touch-screen to provide enhanced security features. The router is factory pre-configured with hard to anticipate encryption. The router displays interactive menus on a touch screen so that administrators may interact with the device to change the security settings.

### SUMMARY

In order to solve the problem in the related art that when the user performs initialization setup on the wireless router, the user needs to create a connection between the smart phone and the wireless router and manually input admin backstage address which makes the operation process complicated, the present disclosure provides a method and an apparatus for displaying a router setup interface.

According to the invention, there is provided an apparatus as defined by claim 1. Optionally, the apparatus further includes:
a prompt information displaying module, configured to, prior to creating a connection channel between the terminal and the wireless router by the connection creating module, display prompt information which is used to prompt whether to select to set the wireless router.

The technical solutions provided in the embodiments of the present disclosure may achieve the following beneficial effects.

Based on the configuration parameters contained in the broadcast information transmitted from the wireless router, whether the wireless router's initialization is completed is detected; if the wireless router's initialization is not completed, a connection channel connecting with the wireless router is automatically created, to acquire the setup interface from the wireless router and display the setup interface, thereby solving the problem in the related art that the user needs to perform operations of creating connection and manually inputting admin backstage address which causes the operation process complicated, and achieving the effects of simplifying user's operation process and improving user experience.

It shall be appreciated that the above general description and the detailed description hereinafter are only illustrative and interpretative, but are not intended to limit the present disclosure.

### BRIEF DESCRIPTION OF THE DRAWINGS

The accompanying drawings herein, which are incorporated into and constitute a part of the specification, illustrate embodiments consistent with the present disclosure, and together with the description, serve to explain the principles of the present disclosure.
FIG. 1 is a diagram illustrating an implementing environment involved with methods for displaying a router setup interface according to some exemplary embodiments;
FIG. 2 is a flowchart illustrating a method for displaying a router setup interface according to an exemplary embodiment;
FIG. 3 is a flowchart illustrating a method for displaying a router setup interface according to another exemplary embodiment;
FIG. 4 is a flowchart illustrating a method for displaying a router setup interface according to still another exemplary embodiment;
FIG. 5 is a flowchart illustrating a method for displaying a router setup interface according to an exemplary embodiment;
FIG. 6 is a flowchart illustrating a method for displaying a router setup interface according to another exemplary embodiment;
FIG. 7 is a flowchart illustrating a method for displaying a router setup interface according to an exemplary embodiment;
FIG. 8 is a block diagram illustrating an apparatus for displaying a router setup interface according to an exemplary embodiment;
FIG. 9 is a block diagram illustrating an apparatus for displaying a router setup interface according to another exemplary embodiment;
FIG. 10 is a block diagram illustrating an apparatus for displaying a router setup interface according to an exemplary embodiment;
FIG. 11 is a block diagram illustrating an apparatus for displaying a router setup interface according to another exemplary embodiment;
FIG. 12 is a block diagram illustrating an apparatus for displaying a router setup interface according to an exemplary embodiment; and
FIG. 13 is a block diagram illustrating an apparatus for displaying a router setup interface according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

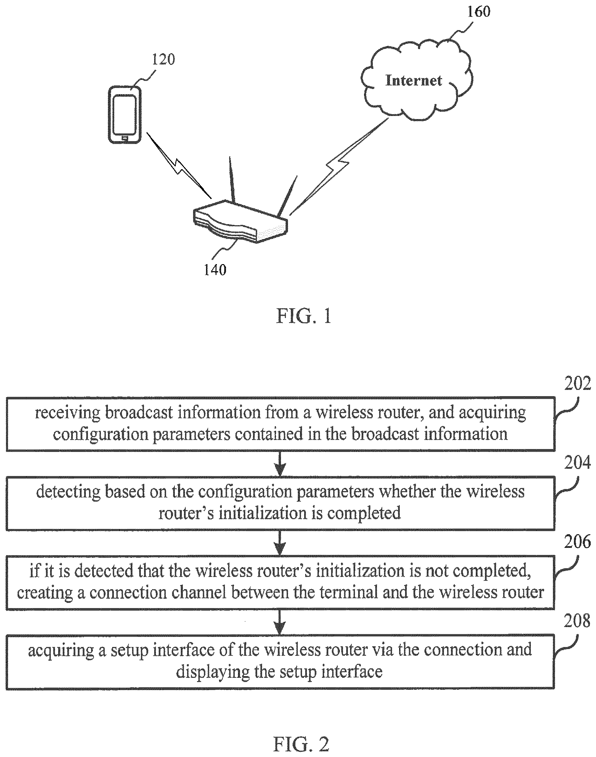

Refer to FIG. 1, which is a diagram illustrating an implementing environment involved with methods for displaying a router setup interface provided by various embodiments of the present disclosure. The implementing environment includes a terminal 120 and a wireless router 140.

The terminal 120 may be a smart terminal which has wireless network accessing function, such as a smart phone, a tablet computer, an e-book reader, or a notebook computer. The wireless router 140 may access to the internet 160. A short range wireless connection, such as Wi-Fi (Wireless Fidelity) connection, may be created between the terminal 120 and the wireless router 140.

FIG. 2 is a flowchart illustrating a method for displaying a router setup interface according to an exemplary embodiment. The method for displaying a router setup interface is applied in the terminal 120 in the implementing environment as shown in FIG. 1. As shown in FIG. 2, the method for displaying a router setup interface may include the following steps.

In step 202, broadcast information is received from a wireless router, and configuration parameters contained in the broadcast information are acquired.

In step 204, it is detected based on the configuration parameters whether the wireless router's initialization is completed.

In step 206, if it is detected that the wireless router's initialization is not completed, a connection channel is created between the terminal and the wireless router.

In step 208, a setup interface of the wireless router is acquired via the connection channel and the setup interface is displayed.

Optionally, the broadcast information contains a routing management frame, and acquiring configuration parameters contained in the broadcast information includes:
acquiring a wireless fidelity simple configuration state identification "Wi-Fi Simple Configuration State" in wireless fidelity simple configuration information "Wi-Fi Simple Configuration" of the routing management frame.

Optionally, detecting based on the configuration parameters whether the wireless router's initialization is completed includes:
recognizing an attribute value of the wireless fidelity simple configuration state identification "Wi-Fi Simple Configuration State";
if the attribute value of the wireless fidelity simple configuration state identification "Wi-Fi Simple Configuration State" is 0x01, determining that the wireless router's initialization is not completed; and
if the attribute value of the wireless fidelity simple configuration state identification "Wi-Fi Simple Configuration State" is 0x02, determining that the wireless router's initialization is completed.

Optionally, prior to creating a connection channel between the terminal and the wireless router, the method further includes: displaying prompt information which is used to prompt whether to select to set the wireless router.

Optionally, creating a connection channel between the terminal and the wireless router includes:
when detecting that it is selected to set the wireless router, creating a connection channel between the terminal and the wireless router.

In conclusion, in the method for displaying a router setup interface provided by the embodiment of the present disclosure, based on the configuration parameters contained in the broadcast information transmitted from the wireless router, whether the wireless router's initialization is completed is detected; if the wireless router's initialization is not completed, a connection channel connecting with the wireless router is automatically created, to acquire the setup interface from the wireless router and display the setup interface, thereby solving the problem in the related art that the user needs to perform operations of creating connection and manually inputting admin backstage address which makes the operation process complicated, and achieving the effects of simplifying user's operation process and improving user experience.

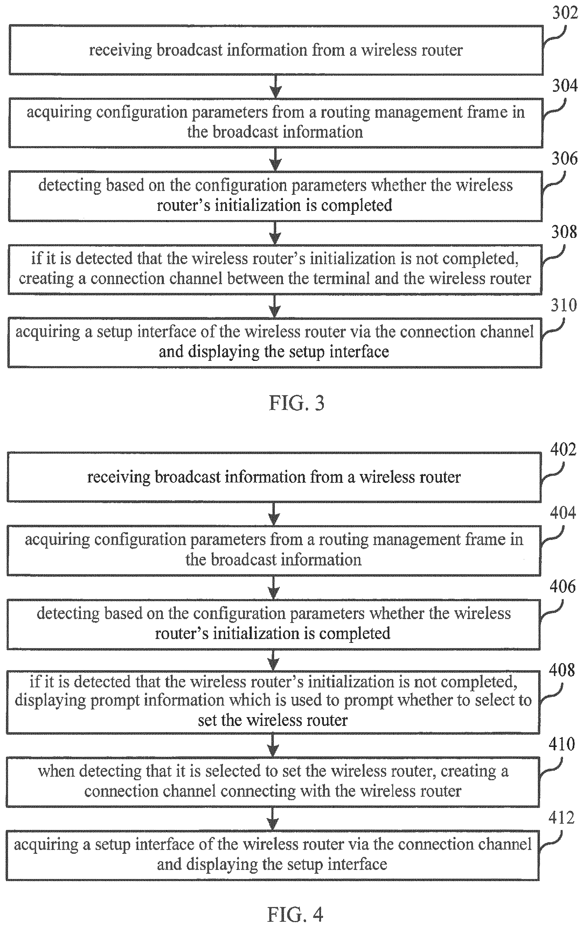

FIG. 3 is a flowchart illustrating a method for displaying a router setup interface according to another exemplary embodiment. The method for displaying a router setup interface is applied in the terminal 120 in the implementing environment as shown in FIG. 1. As shown in FIG. 3, the method for displaying a router setup interface may include the following steps.

In step 302, broadcast information is received from a wireless router.

When a wireless router is turned on to operate, it will transmit broadcast information according to a preset period. The broadcast information may contain basic information of the wireless router, such as SSID (Service Set Identifier) of the wireless router.

In step 304, configuration parameters are acquired from a routing management frame in the broadcast information.

The broadcast information contains the routing management frame. After receiving the broadcast information, the smart phone may acquire configuration parameters from the routing management frame in the broadcast information.

For example, the smart phone may acquire a wireless fidelity simple configuration state identification "Wi-Fi Simple Configuration State" in wireless fidelity simple configuration information "Wi-Fi Simple Configuration" of the routing management frame.

In practice, the configuration parameters may be not provided in the routing management frame, but may be provided in another idle data frame than the routing management frame in the broadcast information. Embodiments of the present disclosure set no limitation to the method for carrying configuration parameters in the broadcast information.

In step 306, it is detected based on the configuration parameters whether the wireless router's initialization is completed.

It is taken as an example that the configuration parameters are "Wi-Fi Simple Configuration State". When the wireless router transmits the broadcast information, if the wireless router's initialization setup is not completed, "Wi-Fi Simple Configuration State" is set as 0x01; and if the wireless router's initialization setup is completed, "Wi-Fi Simple Configuration State" is set as 0x02. After receiving the broadcast information, the smart phone may read the value of "Wi-Fi Simple Configuration State", and if "Wi-Fi Simple Configuration State" is 0x01, it can be determined that the wireless router's initialization is not completed.

In practice, the configuration parameters are not limited to "Wi-Fi Simple Configuration State", but may be any other information that may be used to indicate the initialization state of the wireless router. Embodiments of the present disclosure set no limitation to the representation form of the configuration parameters.

In step 308, if it is detected that the wireless router's initialization is not completed, a connection channel is created between the terminal and the wireless router.

If "Wi-Fi Simple Configuration State" in the broadcast information is 0x01, the smart phone may create a connection channel with the wireless router.

For example, when the smart phone hasn't accessed to other wireless access point, it may directly create a connection channel with the wireless router; when the smart phone has accessed another wireless access point, it may switch to the wireless router.

In step 310, a setup interface of the wireless router is acquired via the connection channel and the setup interface is displayed.

After creating a connection channel with the wireless router, the smart phone may acquire a setup interface from the wireless router, and display the setup interface in a browser page, so that the user performs, in the setup interface, initialization setup on the wireless router. The initialization setup may for example be settings of connection password, web access manner, encryption manner, connection mode, etc. In conclusion, in the method for displaying a router setup interface provided by the embodiment of the present disclosure, based on the configuration parameters contained in the broadcast information transmitted from the wireless router, whether the wireless router's initialization is completed is detected; if the wireless router's initialization is not completed, a connection channel connecting with the wireless router is automatically created, to acquire the setup interface from the wireless router and display the setup interface, thereby solving the problem in the related art that the user needs to perform operations of creating connection and manually inputting admin backstage address which makes the operation process complicated, and achieving the effects of simplifying user's operation process and improving user experience.

FIG. 4 is a flowchart illustrating a method for displaying a router setup interface according to still another exemplary embodiment. The method for displaying a router setup interface is applied in the terminal 120 in the implementing environment as shown in FIG. 1. As shown in FIG. 4, the method for displaying a router setup interface may include the following steps.

In step 402, broadcast information is received from a wireless router.

When a wireless router is turned on to operate, it will transmit broadcast information according to a preset period. The broadcast information may contain basic information of the wireless router, such as SSID (Service Set Identifier) of the wireless router.

In step 404, configuration parameters are acquired from a routing management frame in the broadcast information.

The broadcast information contains the routing management frame. After receiving the broadcast information, the smart phone may acquire configuration parameters from the routing management frame in the broadcast information.

For example, the smart phone may acquire a wireless fidelity simple configuration state identification "Wi-Fi Simple Configuration State" in wireless fidelity simple configuration information "Wi-Fi Simple Configuration" of the routing management frame.

In practice, the configuration parameters may be not provided in the routing management frame, but may be provided in another idle data frame than the routing management frame in the broadcast information. Embodiments of the present disclosure set no limitation to the method for carrying configuration parameters in the broadcast information.

In step 406, it is detected based on the configuration parameters whether the wireless router's initialization is completed.

The smart phone may recognize an attribute value of the wireless fidelity simple configuration state identification "Wi-Fi Simple Configuration State". If the attribute value of the wireless fidelity simple configuration state identification "Wi-Fi Simple Configuration State" is 0x01, it is determined that the wireless router's initialization is not completed; if the attribute value of the wireless fidelity simple configuration state identification "Wi-Fi Simple Configuration State" is 0x02, it is determined that the wireless router's initialization is completed.

It is taken as an example that the configuration parameters are "Wi-Fi Simple Configuration State". When the wireless router transmits the broadcast information, if the wireless router's initialization setup is not completed, "Wi-Fi Simple Configuration State" is set as 0x01; and if the wireless router's initialization setup is completed, "Wi-Fi Simple Configuration State" is set as 0x02. After receiving the broadcast information, the smart phone may read the value of "Wi-Fi Simple Configuration State", and if "Wi-Fi Simple Configuration State" is 0x01, it can be determined that the wireless router's initialization is not completed.

In practice, the configuration parameters are not limited to "Wi-Fi Simple Configuration State", but may be any other information that may be used to indicate the initialization state of the wireless router. Embodiments of the present disclosure set no limitation to the representation form of the configuration parameters.

In step 408, if it is detected that the wireless router's initialization is not completed, prompt information is displayed, which is used to prompt whether to select to set the wireless router.

If "Wi-Fi Simple Configuration State" in the broadcast information is 0x01, the smart phone displays a prompt box, which prompts the user whether to select to perform initialization setup on the wireless router.

Besides, when the smart phone scans and detects that there are two or more wireless routers whose initializations are not completed, the identifiers (e.g., SSIDs of wireless routers) of the two or more wireless routers whose initializations are not completed may be displayed to the user in form of a list, from which the user may select one wireless router to perform setup.

In step 410, when detecting that it is selected to set the wireless router, a connection channel connecting with the wireless router is created.

If the user selects to set the wireless router, the smart phone may create a connection channel connecting with the wireless router.

For example, when the smart phone hasn't accessed another wireless access point, it may directly create a connection channel with the wireless router; when the smart phone has accessed another wireless access point, it may switch to the wireless router.

In step 412, a setup interface of the wireless router is acquired via the connection channel and the setup interface is displayed.

After creating a connection channel with the wireless router, and the user selects to perform initialization setup on the wireless router, the smart phone may acquire a setup interface from the wireless router, and display the setup interface in a browser page, so that the user performs, in the setup interface, initialization setup on the wireless router. The initialization setup may for example be settings of connection password, web access manner, encryption manner, connection mode, etc.

Optionally, the broadcast information transmitted from the wireless router further contains an admin backstage address of the wireless router. The smart phone may extract the admin backstage address from the broadcast information, and according to the admin backstage address, acquire a setup interface from the wireless router and display the setup interface.

Admin backstage addresses of different types of wireless routers may be different. In embodiments of the present disclosure, the wireless router adds its own admin backstage address to the broadcast information. After receiving the broadcast information, and detecting that the wireless router's initialization setup is not completed, the smart phone may acquire the setup interface of the wireless router according to the admin backstage address carried in the broadcast information.

The broadcast information may also carry type information of the wireless router. According to the type information of the wireless router, the smart phone may determine the admin backstage address of the wireless router, and thereby acquire the setup interface according to the determined admin backstage address. Alternatively, since the kinds of admin backstage address of the wireless router are relatively few, for example, current common admin backstage addresses include 192.168.1.1 and 192.168.0.1, thus the smart phone may try different admin backstage addresses one by one until it acquires the setup interface successfully.

In conclusion, in the method for displaying a router setup interface provided by the embodiment of the present disclosure, based on the configuration parameters contained in the broadcast information transmitted from the wireless router, whether the wireless router's initialization is completed is detected; if the wireless router's initialization is not completed, a connection channel connecting with the wireless router is automatically created, to acquire the setup interface from the wireless router and display the setup interface, thereby solving the problem in the related art that the user needs to perform operations of creating connection and manually inputting admin backstage address which causes the operation process complicated, and achieving the effects of simplifying user's operation process and improving user experience.

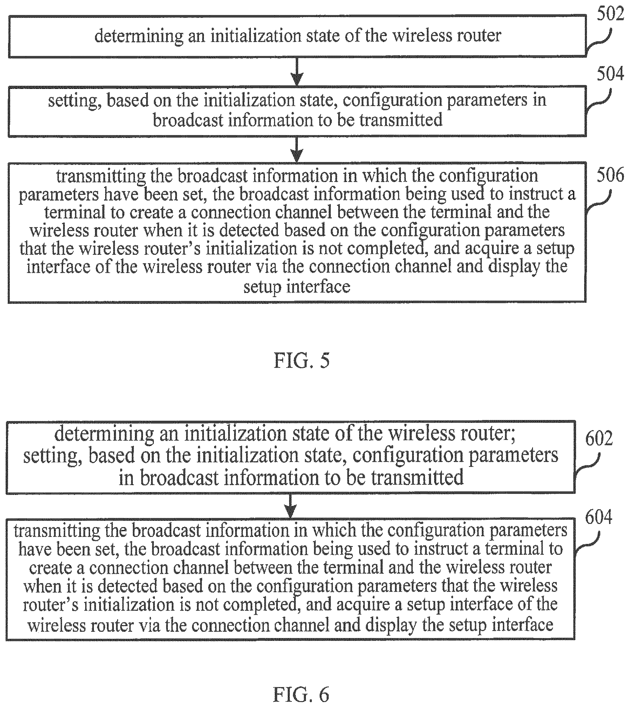

FIG. 5 is a flowchart illustrating a method for displaying a router setup interface according to an exemplary embodiment. The method for displaying a router setup interface is applied in the wireless router 140 in the implementing environment as shown in FIG. 1. As shown in FIG. 5, the method for displaying a router setup interface may include the following steps.

In step 502, an initialization state of the wireless router is determined.

In step 504, based on the initialization state, configuration parameters in broadcast information to be transmitted are set.

In step 506, the broadcast information in which the configuration parameters have been set is transmitted, the broadcast information being used to instruct a terminal to create a connection channel between the terminal and the wireless router when it is detected based on the configuration parameters that the wireless router's initialization is not completed, and acquire a setup interface of the wireless router via the connection channel and display the setup interface.

In conclusion, in the method for displaying a wireless router setup interface provided by the embodiment of the present disclosure, configuration parameters are set in the broadcast information of the wireless router according to the initialization state of the wireless router, such that when detecting based on the configuration parameters that the wireless router's initialization is not completed, the terminal creates a connection channel between the terminal and the wireless router, to acquire the setup interface of the wireless router via the connection and display the setup interface, thereby solving the problem in the related art that the user needs to perform operations of creating connection and manually inputting admin backstage address which makes the operation process complicated, and achieving the effects of simplifying user's operation process and improving user experience.

FIG. 6 is a flowchart illustrating a method for displaying a router setup interface according to another exemplary embodiment. The method for displaying a router setup interface is applied in the wireless router 140 in the implementing environment as shown in FIG. 1. As shown in FIG. 6, the method for displaying a router setup interface may include the following steps.

In step 602, an initialization state of the wireless router is determined, and based on the initialization state, configuration parameters in broadcast information to be transmitted are set.

The broadcast information contains a routing management frame. The wireless router may set configuration parameters in the routing management frame. In practice, the configuration parameters may be not provided in the routing management frame, but may be provided in another idle data frame than the routing management frame in the broadcast information. Embodiments of the present disclosure set no limitation to the method for carrying configuration parameters in the broadcast information.

When setting the configuration parameters, if the initialization state of the wireless router is that the initialization is not completed, a wireless fidelity simple configuration state identification "Wi-Fi Simple Configuration State" in the routing management frame is set as 0x01; if the initialization state of the wireless router is that the initialization is completed, an attribute value of the wireless fidelity simple configuration state identification "Wi-Fi Simple Configuration State" in the routing management frame is set as 0x02.

It is taken as an example that the configuration parameters are "Wi-Fi Simple Configuration State". When the wireless router sets the configuration parameters, if the wireless router's initialization setup is not completed, "Wi-Fi Simple Configuration State" is set as 0x01; and if the wireless router's initialization setup is completed, "Wi-Fi Simple Configuration State" is set as 0x02.

In practice, the configuration parameters are not limited to "Wi-Fi Simple Configuration State", but may be any other information that may be used to indicate the initialization state of the wireless router. Embodiments of the present disclosure set no limitation to the representation form of the configuration parameters.

In step 604, the broadcast information in which the configuration parameters have been set is transmitted, the broadcast information being used to instruct a terminal to create a connection channel between the terminal and the wireless router when it is detected based on the configuration parameters that the wireless router's initialization is not completed, and acquire a setup interface of the wireless router via the connection channel and display the setup interface.

After receiving the broadcast information, the smart phone may read the value of "Wi-Fi Simple Configuration State", and if "Wi-Fi Simple Configuration State" is 0x01, it can be determined that the wireless router's initialization is not completed. The wireless router may add an admin backstage address of the wireless router to the broadcast information. The smart phone may extract the admin backstage address from the broadcast information, and according to the admin backstage address, acquire a setup interface from the wireless router and display the setup interface. Admin backstage addresses of different types of wireless routers may be different. In embodiments of the present disclosure, the wireless router adds its own admin backstage address to the broadcast information. After receiving the broadcast information, and detecting that the wireless router's initialization setup is not completed, the smart phone may acquire the setup interface of the wireless router according to the admin backstage address carried in the broadcast information. Alternatively, the wireless router may add type information of the wireless router to the broadcast information. According to the type information of the wireless router, the smart phone may determine the admin backstage address of the wireless router, and thereby acquire the setup interface according to the determined admin backstage address.

In conclusion, in the method for displaying a router setup interface provided by the embodiment of the present disclosure, configuration parameters are set in the broadcast information of the wireless router according to the initialization state of the wireless router, such that when detecting based on the configuration parameters that the wireless router's initialization is not completed, the terminal creates a connection channel between the terminal and the wireless router, to acquire the setup interface of the wireless router via the connection and display the setup interface, thereby solving the problem in the related art that the user needs to perform operations of creating connection and manually inputting admin backstage address which makes the operation process complicated, and achieving the effects of simplifying user's operation process and improving user experience.

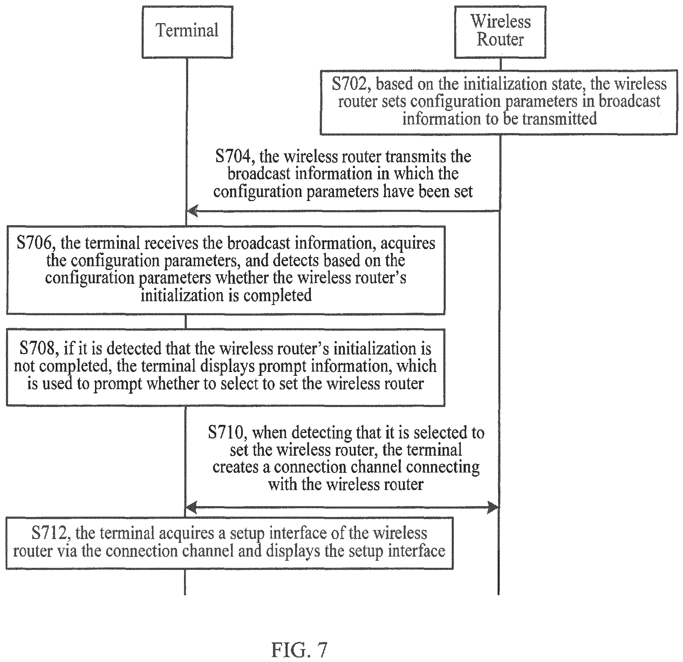

FIG. 7 is a flowchart illustrating a method for displaying a router setup interface according to an exemplary embodiment. The method for displaying a router setup interface is applied in the implementing environment as shown in FIG. 1. As shown in FIG. 7, the method for displaying a router setup interface may include the following steps.

In step 702, based on the initialization state, the wireless router sets configuration parameters in broadcast information to be transmitted.

When a wireless router is turned on to operate, it will transmit broadcast information according to a preset period. The broadcast information may contain basic information of the wireless router, such as SSID (Service Set Identifier) of the wireless router.

The broadcast information contains a routing management frame. In the present embodiment of the disclosure, the wireless router may set configuration parameters in the routing management frame. In practice, the configuration parameters may be not provided in the routing management frame, but may be provided in another idle data frame than the routing management frame in the broadcast information. Embodiments of the present disclosure set no limitation to the method for carrying configuration parameters in the broadcast information.

When setting the configuration parameters, if the initialization state is that the initialization is not completed, the wireless router sets a wireless fidelity simple configuration state identification "Wi-Fi Simple Configuration State" in the routing management frame as 0x01; if the wireless router's initialization setup is completed, the"Wi-Fi Simple Configuration State" is set as 0x02.

In practice, the configuration parameters are not limited to "Wi-Fi Simple Configuration State", but may be any other information that may be used to indicate the initialization state of the wireless router. Embodiments of the present disclosure set no limitation to the representation form of the configuration parameters.

In step 704, the wireless router transmits the broadcast information in which the configuration parameters have been set.

In step 706, the terminal receives the broadcast information, acquires the configuration parameters, and detects based on the configuration parameters whether the wireless router's initialization is completed.

It is taken as an example that the configuration parameters are "Wi-Fi Simple Configuration State". After receiving the broadcast information, the smart phone may read the value of "Wi-Fi Simple Configuration State", and if "Wi-Fi Simple Configuration State" is 0x01, it can be determined that the wireless router's initialization is not completed.

In step 708, if it is detected that the wireless router's initialization is not completed, the terminal displays prompt information, which is used to prompt whether to select to set the wireless router.

If "Wi-Fi Simple Configuration State" in the broadcast information is 0x01, the smart phone displays a prompt box, which prompts the user whether to select to perform initialization setup on the wireless router.

Besides, when the smart phone scans and detects that there are two or more wireless routers whose initializations are not completed, the identifiers (e.g., SSIDs of wireless routers) of the two or more wireless routers whose initializations are not completed may be displayed to the user in form of a list, from which the user may select one wireless router to perform setup.

In step 710, when detecting that it is selected to set the wireless router, the terminal creates a connection channel connecting with the wireless router.

If the user selects to set the wireless router, the smart phone may create a connection channel connecting with the wireless router. For example, when the smart phone hasn't accessed to another wireless access point, it may directly create a connection channel with the wireless router; when the smart phone has accessed to another wireless access point, it may switch to the wireless router.

In step 712, the terminal acquires a setup interface of the wireless router via the connection channel and displays the setup interface.

After creating a connection channel with the wireless router, and the user selects to perform initialization setup on the wireless router, the smart phone may acquire a setup interface from the wireless router, and display the setup interface in a browser page, so that the user performs, in the setup interface, initialization setup on the wireless router. The initialization setup may for example be settings of connection password, web access manner, encryption manner, connection mode, etc. Optionally, the broadcast information transmitted from the wireless router further contains an admin backstage address of the wireless router. The smart phone may extract the admin backstage address from the broadcast information, and according to the admin backstage address, acquire a setup interface from the wireless router and display the setup interface.

Admin backstage addresses of different types of wireless routers may be different. In embodiments of the present disclosure, the wireless router adds its own admin backstage address to the broadcast information. After receiving the broadcast information, and detecting that the wireless router's initialization setup is not completed, the smart phone may acquire the setup interface of the wireless router according to the admin backstage address carried in the broadcast information.

The broadcast information may also carry type information of the wireless router. According to the type information of the wireless router, the smart phone may determine the admin backstage address of the wireless router, and thereby acquire the setup interface according to the determined admin backstage address. Alternatively, since the kinds of admin backstage address of the wireless router are relatively few, for example, current common admin backstage addresses include 192.168.1.1 and 192.168.0.1, thus the smart phone may try different admin backstage addresses one by one until it acquires the setup interface successfully.

In conclusion, in the method for displaying a router setup interface provided by the embodiment of the present disclosure, based on the configuration parameters contained in the broadcast information transmitted from the wireless router, whether the wireless router's initialization is completed is detected; if the wireless router's initialization is not completed, a connection channel connecting with the wireless router is automatically created, to acquire the setup interface from the wireless router and display the setup interface, thereby solving the problem in the related art that the user needs to perform operations of creating connection and manually inputting admin backstage address which makes the operation process complicated, and achieving the effects of simplifying user's operation process and improving user experience.

Apparatus embodiments of the present disclosure are described hereinafter, wherein the apparatuses may be used to perform the method embodiments of the present disclosure. for details that are not disclosed in the apparatus embodiments of the present disclosure, reference may be made to the method embodiments of the present disclosure.

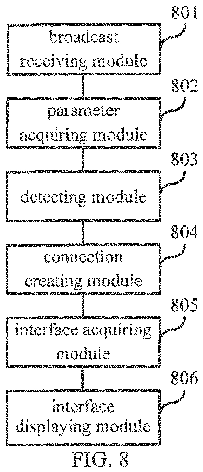

FIG. 8 is a block diagram illustrating an apparatus for displaying a router setup interface according to an exemplary embodiment. The apparatus for displaying a router setup interface is applied in the terminal 120 in the implementing environment as shown in FIG. 1. As shown in FIG. 8, the apparatus for displaying a router setup interface includes but is not limited to: a broadcast receiving module 801, a parameter acquiring module 802, a detecting module 803, a connection creating module 804, an interface acquiring module 805, and an interface displaying module 806.

The broadcast receiving module 801 is configured to receive broadcast information from a wireless router;
The parameter acquiring module 802 is configured to acquire configuration parameters contained in the broadcast information;
The detecting module 803 is configured to detect based on the configuration parameters whether the wireless router's initialization is completed;
The connection creating module 804 is configured to, if it is detected by the detecting module 803 that the wireless router's initialization is not completed, create a connection channel between the terminal and the wireless router;
The interface acquiring module 805 is configured to acquire a setup interface of the wireless router via the connection channel; and
The interface displaying module 806 is configured to display the setup interface acquired by the interface acquiring module 805.

In conclusion, in the apparatus for displaying a router setup interface provided by the embodiment of the present disclosure, based on the configuration parameters contained in the broadcast information transmitted from the wireless router, the terminal detects whether the wireless router's initialization is completed; if the wireless router's initialization is not completed, a connection channel connecting with the wireless router is automatically created, to acquire the setup interface from the wireless router and display the setup interface, thereby solving the problem in the related art that the user needs to perform operations of creating connection and manually inputting admin backstage address which makes the operation process complicated, and achieving the effects of simplifying user's operation process and improving user experience.

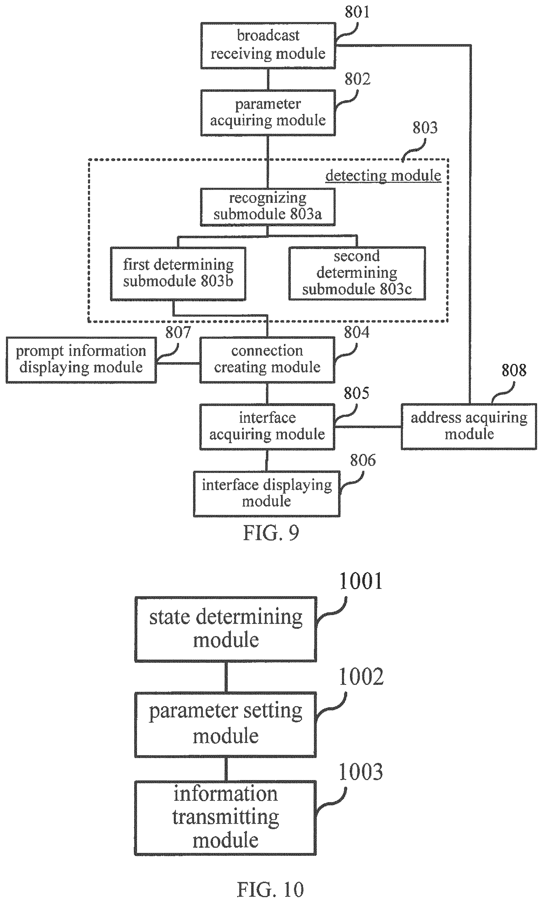

FIG. 9 is a block diagram illustrating an apparatus for displaying a router setup interface according to another exemplary embodiment. The apparatus for displaying a router setup interface is applied in the terminal 120 in the implementing environment as shown in FIG. 1. As shown in FIG. 9, the apparatus for displaying a router setup interface includes but is not limited to: a broadcast receiving module 801, a parameter acquiring module 802, a detecting module 803, a connection creating module 804, an interface acquiring module 805, and an interface displaying module 806.

The broadcast receiving module 801 is configured to receive broadcast information from a wireless router;
The parameter acquiring module 802 is configured to acquire configuration parameters contained in the broadcast information;
The detecting module 803 is configured to detect based on the configuration parameters whether the wireless router's initialization is completed;
The connection creating module 804 is configured to, if it is detected by the detecting module 803 that the wireless router's initialization is not completed, create a connection channel between the terminal and the wireless router;
The interface acquiring module 805 is configured to acquire a setup interface of the wireless router via the connection channel; and
The interface displaying module 806 is configured to display the setup interface acquired by the interface acquiring module 805.

Optionally, the parameter acquiring module 802 is configured to acquire a wireless fidelity simple configuration state identification "Wi-Fi Simple Configuration State" in wireless fidelity simple configuration information "Wi-Fi Simple Configuration" of a routing management frame, and the broadcast information contains the routing management frame.

Optionally, the detecting module 803 includes: a recognizing submodule 803a, a first determining submodule 803b and a second determining submodule 803c.

The recognizing submodule 803a is configured to recognize an attribute value of the wireless fidelity simple configuration state identification "Wi-Fi Simple Configuration State";

The first determining submodule 803b is configured to, if the attribute value of the wireless fidelity simple configuration state identification "Wi-Fi Simple Configuration State" is 0x01, determine that the wireless router's initialization is not completed; and

The second determining submodule 803c is configured to, if the attribute value of the wireless fidelity simple configuration state identification "Wi-Fi Simple Configuration State" is 0x02, determine that the wireless router's initialization is completed.

Optionally, the apparatus further includes: a prompt information displaying module 807.

The prompt information displaying module 807 is configured to, prior to creating a connection channel between the terminal and the wireless router by the connection creating module 804, display prompt information which is used to prompt whether to select to set the wireless router.

Optionally, the connection creating module 804 is configured to, when it is detected that setting the wireless router is selected, create a connection channel between the terminal and the wireless router.

Optionally, the apparatus further includes: an address acquiring module 808.

The address acquiring module 808 is configured to acquire an admin backstage address contained in the broadcast information.

The interface acquiring module 805 is configured to acquire a setup interface of the wireless router according to the admin backstage address.

In conclusion, in the apparatus for displaying a router setup interface provided by the embodiment of the present disclosure, based on the configuration parameters contained in the broadcast information transmitted from the wireless router, the terminal detects whether the wireless router's initialization is completed; if the wireless router's initialization is not completed, a connection channel connecting with the wireless router is automatically created, to acquire the setup interface from the wireless router and display the setup interface, thereby solving the problem in the related art that the user needs to perform operations of creating connection and manually inputting admin backstage address which makes the operation process complicated, and achieving the effects of simplifying user's operation process and improving user experience.

FIG. 10 is a block diagram illustrating an apparatus for displaying a router setup interface according to an exemplary embodiment. The apparatus for displaying a router setup interface is applied in the wireless router 140 in the implementing environment as shown in FIG. 1. As shown in FIG. 10, the apparatus for displaying a router setup interface includes but not limited to: a state determining module 1001, a parameter setting module 1002 and an information transmitting module 1003.

The state determining module 1001 is configured to determine an initialization state of the wireless router;

The parameter setting module 1002 is configured to set, based on the initialization state, configuration parameters in broadcast information to be transmitted; and

The information transmitting module 1003 is configured to transmit the broadcast information in which the configuration parameters have been set, the broadcast information being used to instruct a terminal to create a connection channel between the terminal and the wireless router when it is detected based on the configuration parameters that the wireless router's initialization is not completed, and acquire a setup interface of the wireless router via the connection channel and display the setup interface.

In conclusion, in the apparatus for displaying a router setup interface provided by the embodiment of the present disclosure, configuration parameters are set in the broadcast information of the wireless router according to the initialization state of the wireless router, such that when detecting based on the configuration parameters that the wireless router's initialization is not completed, the terminal creates a connection channel between the terminal and the wireless router, to acquire the setup interface of the wireless router via the connection channel and display the setup interface, thereby solving the problem in the related art that the user needs to perform operations of creating connection and manually inputting admin backstage address which makes the operation process complicated, and achieving the effects of simplifying user's operation process and improving user experience.

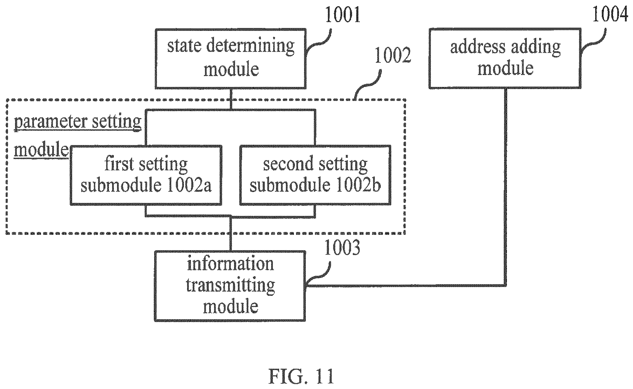

FIG. 11 is a block diagram illustrating an apparatus for displaying a router setup interface according to an exemplary embodiment. The apparatus for displaying a router setup interface is applied in the wireless router 140 in the implementing environment as shown in FIG. 1. As shown in FIG. 11, the apparatus for displaying a router setup interface includes but is not limited to: a state determining module 1001, a parameter setting module 1002 and an information transmitting module 1003.

The state determining module 1001 is configured to determine an initialization state of the wireless router;
The parameter setting module 1002 is configured to set, based on the initialization state, configuration parameters in broadcast information to be transmitted; and
The information transmitting module 1003 is configured to transmit the broadcast information in which the configuration parameters have been set, the broadcast information being used to instruct a terminal to create a connection channel between the terminal and the wireless router when it is detected based on the configuration parameters that the wireless router's initialization is not completed, and acquire a setup interface of the wireless router via the connection channel and display the setup interface.

Optionally, the parameter setting module 1002 includes: a first setting submodule 1002a and a second setting submodule 1002b.

The first setting submodule 1002a is configured to, if the initialization state of the wireless router is that the initialization is not completed, set an attribute value of a wireless fidelity simple configuration state identification "Wi-Fi Simple Configuration State" in a routing management frame as 0x01, the broadcast information containing the routing management frame; and
The second setting submodule 1002b is configured to, if the initialization state of the wireless router is that the initialization is completed, set the attribute value of a wireless fidelity simple configuration state identification "Wi-Fi Simple Configuration State" in the routing management frame as 0x02.

Optionally, the apparatus further includes: an address adding module 1004.

The address adding module 1004 is configured to add an admin backstage address of the wireless router into the broadcast information to be transmitted.

In conclusion, in the apparatus for displaying a router setup interface provided by the embodiment of the present disclosure, configuration parameters are set in the broadcast information of the wireless router according to the initialization state of the wireless router, such that when detecting based on the configuration parameters that the wireless router's initialization is not completed, the terminal creates a connection channel between the terminal and the wireless router, to acquire the setup interface of the wireless router via the connection channel and display the setup interface, thereby solving the problem in the related art that the user needs to perform operations of creating connection and manually inputting admin backstage address which makes the operation process complicated, and achieving the effects of simplifying user's operation process and improving user experience.

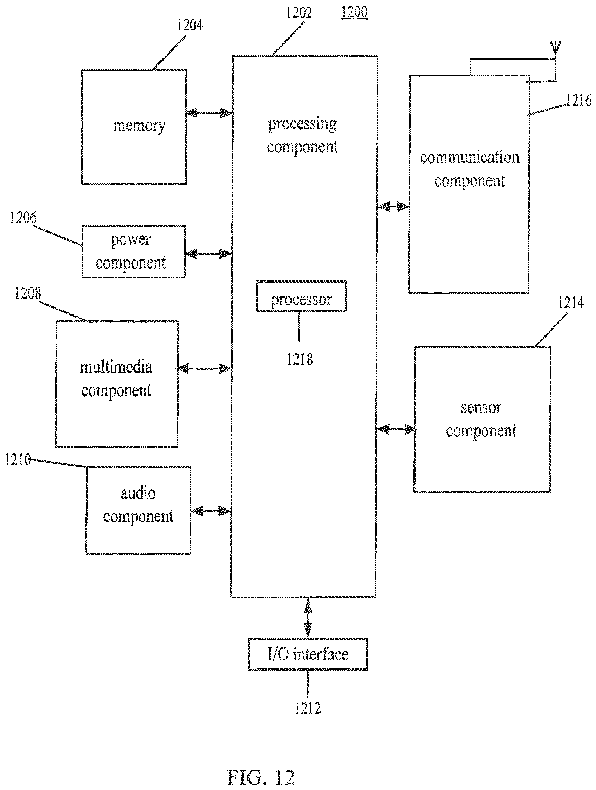

FIG. 12 is a block diagram illustrating an apparatus 1200 for displaying a router setup interface according to an exemplary embodiment. For example, the apparatus 1200 may be a mobile phone, a computer, a digital broadcast terminal, a messaging device, a gaming console, a tablet, a medical device, exercise equipment, a personal digital assistant, and the like.

Referring to FIG. 12, the apparatus 1200 may include one or more of the following components: a processing component 1202, a memory 1204, a power component 1206, a multimedia component 1208, an audio component 1210, an input/output (I/O) interface 1212, a sensor component 1214, and a communication component 1216.

The processing component 1202 typically controls overall operations of the apparatus 1200, such as the operations associated with display, telephone calls, data communications, camera operations, and recording operations. The processing component 1202 may include one or more processors 1218 to execute instructions to perform all or a part of the steps in the above-described methods. In addition, the processing component 1202 may include one or more modules which facilitate the interaction between the processing component 1202 and other components. For example, the processing component 1202 may include a multimedia module to facilitate the interaction between the multimedia component 1208 and the processing component 1202.

The memory 1204 is configured to store various types of data to support the operations of the apparatus 1200. Examples of such data include instructions for any application or method operated on the apparatus 1200, contact data, phonebook data, messages, pictures, videos, and the like. The memory 1204 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk. The memory 1204 further stores one or more modules which are configured to be executed by the one or more processors 1220, to perform all or a part of the steps in the methods shown in anyone of FIG. 2, FIG. 3 or FIG. 4.

The power component 1206 provides power to various components of the apparatus 1200. The power component 1206 may include a power management system, one or more power supplies, and other components associated with the generation, management, and distribution of power in the apparatus 1200.

The multimedia component 1208 includes a screen providing an output interface between the apparatus 1200 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1208 includes a front camera and/or a rear camera. The front camera and/or the rear camera may receive external multimedia data while the apparatus 1200 is in an operation mode, such as a photographing mode or a video mode. Each of the front camera and the rear camera may be a fixed optical lens system or have focus and optical zoom capability.

The audio component 1210 is configured to output and/or input audio signals. For example, the audio component 1210 includes a microphone (MIC) configured to receive an external audio signal when the apparatus 1200 is in an operation mode, such as a call mode, a recording mode, or a voice recognition mode. The received audio signal may be further stored in the memory 1204 or transmitted via the communication component 1216. In some embodiments, the audio component 1210 further includes a speaker to output audio signals.

The I/O interface 1212 provides an interface between the processing component 1202 and a peripheral interface module, such as a keyboard, a click wheel, a button, or the like. The buttons may include, but are not limited to, a home button, a volume button, a starting button, and a locking button.

The sensor component 1214 includes one or more sensors to provide status assessments of various aspects of the apparatus 1200. For example, the sensor component 1214 may detect an open/closed status of the apparatus 1200, relative positioning of components, e.g., the display and the keypad, of the apparatus 1200, a change in position of the apparatus 1200 or a component of the apparatus 1200, a presence or absence of user contact with the apparatus 1200, an orientation or an acceleration/deceleration of the apparatus 1200, and a change in temperature of the apparatus 1200. The sensor component 1214 may include a proximity sensor configured to detect the presence of nearby objects without any physical contact. The sensor component 1214 may also include a light sensor, such as a CMOS or CCD image sensor, for use in imaging applications. In some embodiments, the sensor component 1214 may also include an accelerometer sensor, a gyroscope sensor, a magnetic sensor, a pressure sensor, or a temperature sensor.

The communication component 1216 is configured to facilitate communications, wired or wirelessly, between the apparatus 1200 and other devices. The apparatus 1200 may access a wireless network based on a communication standard, such as WiFi, 2G, or 3G, or a combination thereof. In one exemplary embodiment, the communication component 1216 receives a broadcast signal or broadcast associated notification information from an external broadcast management system via a broadcast channel. In one exemplary embodiment, the communication component 1216 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 1200 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above-described methods.

In exemplary embodiments, there is also provided a non-transitory computer-readable storage medium including instructions, such as included in the memory 1204, executable by the processor 1218 in the apparatus 1200, for performing the above-described methods. For example, the non-transitory computer-readable storage medium may be a ROM, a random access memory (RAM), a compact disc read-only memory (CD-ROM), a magnetic tape, a floppy disc, an optical data storage device, or the like.

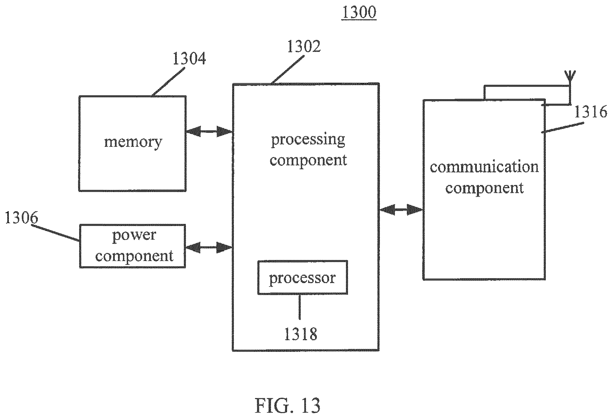

FIG. 13 is a block diagram illustrating an apparatus 1300 for displaying a router setup interface according to an exemplary embodiment. For example, the apparatus 1300 may be a router, a switch, or the like.

Referring to FIG. 13, the apparatus 1300 may include one or more of the following components: a processing component 1302, a memory 1304, a power component 1306, and a communication component 1316.

The processing component 1302 typically controls overall operations of the apparatus 1300, such as the operations associated with address resolution, data transmission and flow control. The processing component 1302 may include one or more processors 1318 to execute instructions to perform all or a part of the steps in the above-described methods. In addition, the processing component 1302 may include one or more modules which facilitate the interaction between the processing component 1302 and other components. For example, the processing component 1302 may include a multimedia module to facilitate the interaction between the multimedia component 1308 and the processing component 1302.

The memory 1304 is configured to store various types of data to support the operations of the apparatus 1300. Examples of such data include instructions for any application or method operated on the apparatus 1300, user data, and the like. The memory 1304 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk. The memory 1304 further stores one or more modules which are configured to be executed by the one or more processors 1320, to perform all or a part of the steps in the methods shown in FIG. 5 or FIG. 6.

The power component 1306 provides power to various components of the apparatus 1300. The power component 1306 may include a power management system, one or more power supplies, and other components associated with the generation, management, and distribution of power in the apparatus 1300.

The communication component 1316 is configured to facilitate communications, wired or wirelessly, between the apparatus 1300 and other devices. The apparatus 1300 may establish a wireless network based on a communication standard, such as a WiFi network. In one exemplary embodiment, the communication component 1316 transmits a broadcast signal or broadcast associated information to the outside via a broadcast channel.

In exemplary embodiments, the apparatus 1300 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above-described methods.

In exemplary embodiments, there is also provided a non-transitory computer-readable storage medium including instructions, such as included in the memory 1304, executable by the processor 1318 in the apparatus 1300, for performing the above-described methods. For example, the non-transitory computer-readable storage medium may be a ROM, a random access memory (RAM), a compact disc read-only memory (CD-ROM), a magnetic tape, a floppy disc, an optical data storage device, or the like.

With respect to the apparatuses in the above embodiments, the specific implementations of operations executed by various modules thereof have been in detail described in the embodiments illustrating the methods, which are not described herein any further.

It will be appreciated that the present disclosure is not limited to the exact construction that has been described above and illustrated in the accompanying drawings, and that various modifications and changes can be made without departing from the scope thereof. The scope of the present disclosure is only defined by the appended claims.

## Claims

1. An apparatus for displaying a router setup interface, which is applied in a terminal, the apparatus comprising:
a broadcast receiving module (801), configured to receive information broadcast from a wireless router, said broadcast information including router configuration parameters;
a parameter acquiring module (802), configured to acquire said configuration parameters contained in the broadcast information;
a detecting module (803), configured to detect based on the configuration parameters whether the wireless router's initialization is completed;
a connection creating module (804), configured to, if it is detected by the detecting module (803) that the wireless router's initialization is not completed, create a connection channel between the terminal and the wireless router;
an interface acquiring module (805), configured to acquire a setup interface of the wireless router via the connection channel; and
an interface displaying module (806), configured to display the setup interface acquired by the interface acquiring module (805); and wherein the detecting module (803) comprises:
a recognizing submodule (803a), configured to recognize an attribute value of the wireless fidelity simple configuration state identification "Wi-Fi Simple Configuration State";
a first determining submodule (803b), configured to, if the attribute value of the wireless fidelity simple configuration state identification "Wi-Fi Simple Configuration State" is 0x01, determine that the wireless router's initialization is not completed; and
a second determining submodule (803c), configured to, if the attribute value of the wireless fidelity simple configuration state identification "Wi-Fi Simple Configuration State" is 0x02, determine that the wireless router's initialization is completed.

2. The apparatus according to claim 1, **characterized in that**,
the parameter acquiring module (802) is configured to acquire a wireless fidelity simple configuration state identification "Wi-Fi Simple Configuration State" in wireless fidelity simple configuration information "Wi-Fi Simple Configuration" of a routing management frame, and the broadcast information contains the routing management frame.

3. The apparatus according to claim 1 or 2, **characterized in that** the apparatus further comprises:
a prompt information displaying module (807), configured to, prior to creating a connection channel between the terminal and the wireless router by the connection creating module (804), display prompt information which is used to prompt whether to select to set the wireless router.

## Patentansprüche

1. Einrichtung zum Anzeigen einer Router-Einstellschnittstelle, die in einem Endgerät angewendet wird, wobei die Einrichtung umfasst:
ein Rundfunkempfangsmodul (801), das konfiguriert ist, Informationen zu empfangen, die von einem Funkrouter rundgesendet werden, wobei die Rundfunkinformationen Router-Konfigurationsparameter beinhalten;
ein Parameterbezugsmodul (802), das konfiguriert ist, die Konfigurationsparameter zu beziehen, die in den Rundfunkinformationen enthalten sind;
ein Erfassungsmodul (803), das konfiguriert ist, basierend auf den Konfigurationsparametern zu erfassen, ob die Initialisierung des Funkrouters abgeschlossen ist;
ein Verbindungserzeugungsmodul (804), das konfiguriert ist, falls von dem Erfassungsmodul (803) erfasst wird, dass die Initialisierung des Funkrouters nicht abgeschlossen ist, einen Verbindungskanal zwischen dem Endgerät und dem Funkrouter zu erzeugen;
ein Schnittstellenbezugsmodul (805), das konfiguriert ist, eine Einstellschnittstelle des Funkrouters über den Verbindungskanal zu beziehen; und
ein Schnittstellenanzeigemodul (806), das konfiguriert ist, die Einstellschnittstelle anzuzeigen, die von dem Schnittstellenbezugsmodul (805) bezogen wurde; und wobei das Erfassungsmodul (803) umfasst:
ein Erkennungsteilmodul (803a), das konfiguriert ist, einen Attributwert der einfachen Konfigurationszustandsidentifikation drahtloser Wiedergabetreue "einfacher Wi-Fi Konfigurationszustand" zu erkennen;
ein erstes Bestimmungsteilmodul (803b), das konfiguriert ist, falls der Attributwert der einfachen Konfigurationszustandsidentifikation drahtloser Wiedergabetreue "einfacher Wi-Fi Konfigurationszustand" 0x01 ist, zu bestimmen, dass die Initialisierung des Funkrouters nicht abgeschlossen ist; und
ein zweites Bestimmungsteilmodul (803c), das konfiguriert ist, falls der Attributwert der einfachen Konfigurationszustandsidentifikation drahtloser Wiedergabetreue "einfacher Wi-Fi Konfigurationszustand" 0x02 ist, zu bestimmen, dass die Initialisierung des Funkrouters abgeschlossen ist.

2. Einrichtung nach Anspruch 1, **dadurch gekennzeichnet, dass**
das Parameterbezugsmodul (802) konfiguriert ist, eine einfache Konfigurationszustandsidentifikation drahtloser Wiedergabetreue "einfacher Wi-Fi Konfigurationszustand" in einfachen Konfigurationsinformationen drahtloser Wiedergabetreue "einfache Wi-Fi Konfiguration" eines Weiterleitungsverwaltungsframes zu beziehen, und die Rundfunkinformationen das Weiterleitungsverwaltungsframe enthalten.

3. Einrichtung nach Anspruch 1 oder 2, **dadurch gekennzeichnet, dass** die Einrichtung weiter umfasst:
ein Aufforderungsinformationsanzeigemodul (807), das konfiguriert ist, vor Erzeugen eines Verbindungskanals zwischen dem Endgerät und dem Funkrouter durch das Verbindungserzeugungsmodul (804), Aufforderungsinformationen anzuzeigen, die zur Aufforderung verwendet werden, ob auszuwählen ist, den Funkrouter einzurichten.

## Revendications

1. Appareil permettant d'afficher une interface de réglage de routeur, qui est appliquée dans un terminal, l'appareil comprenant :
un module de réception de diffusion (801), configuré pour recevoir une diffusion d'informations à partir d'un routeur sans fil, lesdites informations de diffusion incluant des paramètres de configuration de routeur ;
un module d'acquisition de paramètres (802), configuré pour acquérir lesdits paramètres de configuration contenus dans les informations de diffusion ;
un module de détection (803), configuré pour détecter, sur la base des paramètres de configuration, si l'initialisation du routeur sans fil est terminée ;
un module de création de connexion (804), configuré pour, s'il est détecté par le module de détection (803) que l'initialisation du routeur sans fil n'est pas terminée, créer un canal de connexion entre le terminal et le routeur sans fil ;
un module d'acquisition d'interface (805), configuré pour acquérir une interface de réglage du routeur sans fil via le canal de connexion ; et
un module d'affichage d'interface (806), configuré pour afficher l'interface de réglage acquise par le module d'acquisition d'interface (805) ; et dans lequel le module de détection (803) comprend :
un sous-module de reconnaissance (803a), configuré pour reconnaître une valeur d'attribut de l'identification d'état de configuration simple wireless fidelity « Wi-Fi Simple Configuration State » ;
un premier sous-module de détermination (803b), configuré pour, si la valeur d'attribut de l'identification d'état de configuration simple wireless fidelity « Wi-Fi Simple Configuration State » est 0x01, déterminer que l'initialisation du routeur sans fil n'est pas terminée ; et
un second sous-module de détermination (803c), configuré pour, si la valeur d'attribut de l'identification d'état de configuration simple wireless fidelity « Wi-Fi Simple Configuration State » est 0x02, déterminer que l'initialisation du routeur sans fil est terminée.

2. Appareil selon la revendication 1, **caractérisé en ce que**,
le module d'acquisition de paramètres (802) est configuré pour acquérir une identification d'état de configuration simple wireless fidelity « Wi-Fi Simple Configuration State » dans des informations de configuration simple wireless fidelity « Wi-Fi Simple Configuration » d'une trame de gestion de routage, et les informations de diffusion contiennent la trame de gestion de routage.

3. Appareil selon la revendication 1 ou 2, **caractérisé en ce que** l'appareil comprend en outre :
un module d'affichage d'informations d'invite (807), configuré pour, avant la création d'un canal de connexion entre le terminal et le routeur sans fil par le module de création de connexion (804), afficher des informations d'invite qui sont utilisées pour inviter à sélectionner ou non pour régler le routeur sans fil.
